# EUROPEAN PATENT APPLICATION

(11) **EP 3 246 815 A1**
(43) Date of publication of application: **22.11.2017**
(21) Application number: 15877541.1
(22) Date of filing: 12.06.2015
(51) Int. Cl.: G06F 9/44

(54) **SYSTEM REALIZING SCRIPT OPERATION IN PRESET EMBEDDED SYSTEM**

(30) Priority: 12.01.2015 CN 201510014270
(71) Applicant: Yutou Technology (Hangzhou) Co., Ltd., Hangzhou City, Zhejiang 311199 (CN)
(72) Inventor: SHI, Jiaqi, Hangzhou Zhejiang 311199 (CN)
(74) Representative: Handsome I.P. Ltd
(86) International application number: PCT/CN2015/081388
(87) International publication number: WO 2016/112625

(57) **Abstract**

The invention discloses a system for implementing script operation in preset embedded system, applied to the intelligent robot. The system comprises: a virtual machine, for script explaining and script execution; a thread pool, which is applied to instance storage of the virtual machine associated with the script task; a management unit, which is applied to connecting the thread pool with the virtual machine; a global table, connected with the thread pool, which is applied to storing identifying information of the thread, corresponding to the script task interrupted due to dispatching the management unit; a matching unit, which is connecting the management unit with the global table. The application of the global table has solved the problem of context in human-robot interaction.

## Description

### BACKGROUND OF THE INVENTION

### 1. Field of the Invention

The invention relates to a field of communications technology, more specifically, to a system for implementing script operation in preset embedded system.

### 2. Description of the Related Art

With the development of electronic technology and the expansion of application areas of the robot, more and more robots are used in many people's daily lives, traditional robots are generally programmed based on POP. POP (Procedure Oriented Programming) is a procedure oriented programming thought, which means that you should analyze and find out the desired procedure for solving the problem, then use appropriate functions to implement procedures step by step, calling functions in sequence, one by one.

So far, the interface of the application was developed from the command line interface to windows interface. The application is developed by using POP, and as a result, the problem of lack of the property of flexibility and easy-maintenance exists. For example, in the traditional graphical interactive mode, the going forward and back of the window is limited and definite. As the program execution is context-dependent (which means the user's instruction is context-dependent in interactive runtime), a programmer has to code lots of "if...... else......", for changing program flow depending on the context, and the same interactive mode may correspond to different results in different contexts. If a programmer takes the traditional programming thought, the programmed contexts will lead to object coupling in large quantities, which would eliminate the advantage of Object-oriented Programming (OOP). Additionally, the traditional embedded development requires a long development process, as there are multiple procedures of compiling, deploying, program burning, and so on, after coding for functional verification. If the system is complex, it will take a lot of time and money.

In conclusion, because of the functional limitation and the lack of the property of flexibility and easy-maintenance, the traditional programmable multifunctional special robot, which can execute specific tasks, has not been able to meet the growing needs of people.

### SUMMARY OF THE INVENTION

Targeting the problems of traditional embedded development process, which are described above, the invention provides an intelligent robot, which has good flexibility and strong exclusivity as well as a property of easy-maintenance, aiming at implementing functional units which can be directly invoked.

The technical solution of the invention is:

A system for implementing script operation in preset embedded system, which is applied to the intelligent robot, comprising:
a virtual machine, configured for interpret and execute scripts;
a thread pool, configured to store instances of the virtual machine associated with a script task;
a management unit, connected to the thread pool and the virtual machine, configured to store the script into the thread pool, the script being instantiated by the virtual machine based on the script task received, and configured to dispatch threads in the thread pool correspondingly based on default strategies;
a global table, connected to the thread pool, configured to store identifying information of the thread which is corresponding to the script task interrupted due to the dispatch by the management unit;
a matching unit, connected to the management unit and the global table, configured to find out whether a record matching the current script task exists in the global table, if exists, informing the management unit to dispatch and execute corresponding threads in the record.

Preferably, further comprising:
an execution unit, connected to the thread pool, configured to execute the corresponding threads in the thread pool based on the dispatch by the management unit.

Preferably, it further comprises:
a script run unit, configured to execute the script tasks received;
an interface unit, connected to the script run unit and the management unit, configured to send the script tasks to the management unit.

Preferably, the script run unit and the interface unit are formed by Java native interfaces which run in a Java virtual machine.

Preferably, the default strategy includes First Input First Output and First Input Late Output.

Preferably, the global table is a hash table.

Preferably, further comprising:
a communication unit, connected to the execution unit, which reads task information and/or execution results of threads executed by the execution unit, and transmits it to a remote server.

The benefit of the invention compared to the prior art is:

Using thread pools improves the completeness of the intelligent robots under the circumstances of an unexpected situation; applying a global table to solve the problem of contexts in the robot's interactions, executing operation according to the context trace of the user, using management units to maintain the exclusive hardware of the robot, thus ensuring correctness of execution of script tasks, and directly invoking functional units, with a property of flexibility and easy-maintenance.

### BRIEF DESCRIPTIONS OF THE DRAWINGS

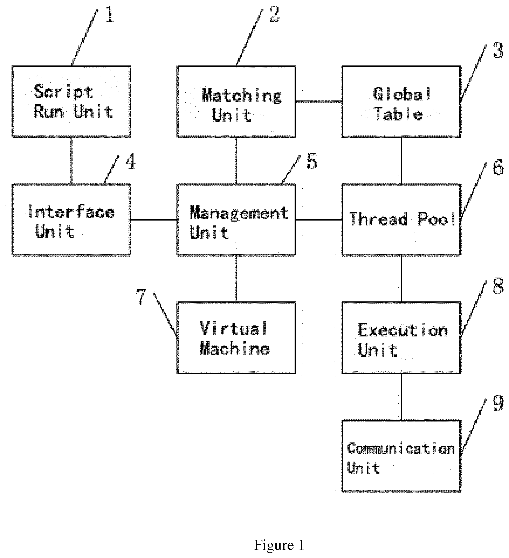

Figure 1 is a module diagram of an embodiment of an intelligent robot according to the invention.

### DETAILED DESCRIPTIONS

The following is the further description of the invention, it combines the drawing and the embodiments, and it cannot be the limitation for the invention.

Referring to Figure 1, it shows the system for implementing script operation in preset embedded system, which is applied to intelligent robots, wherein it comprises:
A virtual machine 7, for script explaining and script execution;
The thread pool 6, applied to instance storage of the virtual machine 7 associated with the script task;
The management unit 5, connected to the thread pool 6 with the virtual machine 7, which configured to store the script into the thread pool 6, the script is instantiated by the virtual machine 7 based on the script task received, and the management unit 5 is configured to dispatch threads in the thread pool 6 accordingly based on default strategies;
The global table 3, connected with the thread pool 6, configured to store identifying information of the thread, which is corresponding to the script task interrupted due to dispatching the management unit 5;
The matching unit 2, connected to the management unit 5 and the global table 3, configured to find out whether a record matching the current script task exists in the global table, if exists, informing the management unit to dispatch and execute corresponding threads in the record.

When the management unit 5 receives a script task, it needs to instantiate the script task, then store the script task into the thread pool 6, based on the default strategy, and then dispatch the threads in the thread pool 6 accordingly, the situations are as follows:

If the current script task has a higher priority than other tasks in the thread pool 6, it will interrupt the thread corresponding to the executing script task, store the status of the thread in the thread pool 6 and store the identifying information of the thread to the global table 3, while the management unit 5 stores the interrupted script task, ultimately executing high-priority threads.

To judge whether the management unit 5 has received the default system messages in preset intervals, and the default system messages are several messages preset by the system, with higher priorities than the executing threads; when the management unit 5 has received a system message, it is necessary to interrupt the thread corresponding to the executing script task and store the status of the thread to the thread pool 6 and store the identifying information of the thread to the global table 3, while management unit 5 stores the interrupted script task, executing the system message.

When the interrupted script task is transmitted to the management unit 5, the matching unit 2 inquires if there are any records that match with one record of the script task, in the global table 3. If there is, it informs the management unit 5 to dispatch the threads in the matching record accordingly, then executes them, namely to recover the preceding interrupted status and resume.

The management unit 5 can be used to maintain the hardware functionality of an intelligent robot, as the hardware of an intelligent robot has a feature of exclusivity. For example, the mechanical structure does not allow multiple script tasks to be called at the same time. To avoid the occurrence of this action, the management unit 5 would dispatch the execution of the program flow. The application of the management unit 5, is able to maintain the exclusive hardware of the intelligent robot and ensure correctness of execution of programs.

In this embodiment, using the thread pool 6 can improve the completeness of the intelligent robots under the circumstances of an unexpected situation; applying a global table 3 can solve the problem of contexts in robot interactions, it is possible to execute operations according to the context trace of the user ; using the management unit 5 can maintain the exclusive hardware of the robot, thus ensuring correctness of the execution of the script tasks, and directly invokes the functional units.

A preferable embodiment, comprises:

The execution unit 8, connected to the thread pool 6; it executes the threads in the thread pool 6, based on the dispatch by the management unit 5.

In this embodiment, the execution unit 8 could execute corresponding threads based on the dispatching of the management unit 5, ensuring correctness of the execution of the script tasks.

Another preferable embodiment, comprises:

The script run unit 1, for executing script tasks received;

The interface unit 4, connected to the script run unit 1 and the management unit 5, configured to send the script tasks to the management unit 5.

In a preferable embodiment, the script run unit 1 and the interface unit 4 are formed by Java Native Interface (JNI, JNI standard is a part of Java platform, which allows the code interaction between JAVA codes and other programming languages) running in Java virtual machine 7.

In this embodiment, a JAVA engine can be used as a script run unit 1, which is able to run script by Java Native Interface, to load executable binary files, to lazily read script tasks for registering in the management unit 5, and to create the scenario so to manage and dispatch execution flow of script tasks.

In a preferable embodiment, the default strategy includes FIFO (First Input First Output) and FILO (First Input Late Output).

In this embodiment, FIFO is actually First-in First-service, such as arranging in queuing model, and FILO is actually First-in Last-service, such as arranging in pile-loading. Script tasks can save and restore points by tags, while dispatch is occurring, script tasks would jump to the tag without reservation for saving and restoring the program flow, and this action can improve the completeness of intelligent robots under the complex circumstances of unexpected situations.

In a preferable embodiment, the global table 3 is a hash table.

In this embodiment, a hash table is a data structure, which can be used to keep a record of the course of users, and a program could choose the most proximate context according to the track. The identifying information of all the interrupted script tasks would be entered into the hash table. If a user calls a function which exists in multiple functions, then the calling will decide to call the exact function from the specific function based on the identifying information of the current hash table.

In a preferable embodiment, it further comprises the communication unit 9, connected to execution unit 8, and communication unit 9 reads the task information and/or the execution result of threads executed by the execution unit 8, and transmits it to a remote server, for feeding back the task information and/or the execution result of current threads to the remote server.

In this embodiment, the script tasks are written in the scripting language, which is an interpreted scripting language, based on the stack type virtual machine 7. The scripting language does not have to be compiled; it generates the native machine code from the hot spot code after interpretation from the interpreters, and could run directly in embedded operating system of intelligent robots. The scripting language is a Turing-complete programming language (the Turing-complete means that the language could emulate everything that can be done by a Turing machine and solve all the calculable problems at present, it is compatible with the Procedure-Oriented software development technology and the Object-Oriented software development technology in programming thought), which is oriented to the interactive environment of the intelligent robots, with the function-oriented development approach. Function-oriented means that basic units are functions, which are mutually independent, and these independent functional basic units can be utilized to perform the specific design of the complex scenario. For instance, a user may use irrelevant multiple functions of a robot, these functions have nothing to do with one another. For example, a user may ask a robot to play some music, and then ask the robot to broadcast the current weather suddenly.

To take this as an example, an intelligent robot has the functions of turning on lights, playing music, language interaction, playing movies and mechanical movement:

The operating system of the robot is an Android intelligent operating system. The script run unit 1 takes charge of linking the script task with Android system. The management unit 5 takes charge of managing and dispatching the execution flow of the script task.

The execution unit 8 could execute corresponding threads in the thread pool 6, based on the dispatching of the management unit 5.

The codes show the logic of the specific application. The application relates to the music playing logic, wherein "//" is an annotation symbol, after which the data will not appear in the program, which are as follows:

```
        //start
        enter(music, light) // enter the music and lights function
        on // In the context of the music and lights, start to play music
        and turn on lights simultaneously
        while (1) {
        var ret = waitForCmd // wait for the user's command
        ifend(ret) // determine whether to end the application
        play (ret) // play music required by the user, light the
        function in functions will also be called, changing lights with music
        }
        <onPause>
        save // save context, record music just played
        off // interrupted by other applications, turn off the music and
        lights temporarily
        exit(music, light) // end the function of music and lights
        <onResume>
        enter(music, light) // enter the music and lights function
        resume //restore context, reload music just played
        on // recover music
```

In this embodiment, using the script task has solved the problem of the time consumed from compiling, deploying, and program burning in use of traditional high-level languages. As long as it puts the source code of the script task into the file system of an intelligent robot, it is able to run directly for executing the function verification; through the script task. It is able to directly expose the function of the system to a programmer, so as to reduce the burden of application developers, and increasing the development efficiency of the program of the intelligent robot. Using a constantly changing global table 3 to solve problems such as context in interaction, so that a programmer does not have to write a significant amount of "if...else..." for changing the program flow based on the context in traditional programming model, and can call functional units directly. These functions inside will decide to execute which program flow according to the global table 3. As you see, the operation is simple and convenient.

Applying this embodiment to the intelligent robot could make the robot become a machine system, which can emulate a human completely in the aspect of perception, thinking and effect, which is not only an efficient intelligent system, but also a comprehensive representation of Artificial intelligence technology.

What is described above is just the preferred embodiments according to the invention, which should not be interpreted as the limitation of embodiments or the scope of protection of the invention. As long as equivalent replacements and obvious changes in technical solutions are based on the Specification and figures of the invention, it will be apparent to those of ordinary skill in the art, and all of these technical solutions are within the scope of the invention.

## Claims

1. A system for implementing script operation in preset embedded system, which is applied to the intelligent robot, comprising:
a virtual machine, configured for interpret and execute scripts;
a thread pool, configured to store instances of the virtual machine associated with a script task;
a management unit, connected to the thread pool and the virtual machine, configured to store the script into the thread pool, the script being instantiated by the virtual machine based on the script task received, and configured to dispatch threads in the thread pool correspondingly based on default strategies;
a global table, connected to the thread pool, configured to store identifying information of the thread which is corresponding to the script task interrupted due to the dispatch by the management unit;
a matching unit, connected to the management unit and the global table, configured to find out whether a record matching the current script task exists in the global table, if exists, informing the management unit to dispatch and execute corresponding threads in the record.

2. The system as claimed in Claim 1, further comprising:
an execution unit, connected to the thread pool, configured to execute the corresponding threads in the thread pool based on the dispatch by the management unit.

3. The system as claimed in Claim 1, wherein it further comprises:
a script run unit, configured to execute the script tasks received;
an interface unit, connected to the script run unit and the management unit, configured to send the script tasks to the management unit.

4. The system as claimed in Claim 3, wherein the script run unit and the interface unit are formed by Java native interfaces which run in a Java virtual machine.

5. The system as claimed in Claim 1, wherein the default strategy includes First Input First Output and First Input Late Output.

6. The system as claimed in Claim 1, wherein the global table is a hash table.

7. The system as claimed in Claim 2, further comprising:
a communication unit, connected to the execution unit, which reads task information and/or execution results of threads executed by the execution unit, and transmits it to a remote server.
